# FASCICULE DE BREVET EUROPEEN

(11) **EP 0 501 860 B1**
(45) Date de publication et mention de la délivrance du brevet: **10.08.1994**
(21) Numéro de dépôt: 92400463.3
(22) Date de dépôt: 24.02.1992
(51) Int. Cl.: F16B 25/00, F16B 25/10, F16B 31/02

(54) **Vis, en particulier vis à fût creux du type vis cheville pour matériau tendre**
Schraube, insbesondere Schraubdübel mit hohlem Schaft für weiches Material
Screw, in particular screw with hollow shaft of the screwplug type for soft material

(30) Priorité: 25.02.1991 FR 9102204
(43) Date de publication de la demande: 02.09.1992
(73) Titulaire: LEGRAND, F-87045 Limoges Cédex (FR)
(72) Inventeur: Auger, Jean Charles, F-76580 Le Trait (FR); Gosse, Marc, F-76690 Saint Georges sur Fontaine (FR)
(74) Mandataire: CABINET BONNET-THIRION

(56) Documents cités:
- GB-A- 1 004 883
- US-A- 4 149 434
- US-A- 4 537 185

## Description

La présente invention concerne d'une manière générale les vis.

Globalement, une telle vis comporte une tête, un fût, et, en saille en hélice sur ce fût, au moins un filet.

La présente invention vise plus particulièrement, mais non nécessairement exclusivement, les vis dont le fût est creux et qui constituent de ce fait une vis cheville, en étant susceptibles soit d'assurer par elles-mêmes la fixation d'un quelconque objet à un quelconque support, soit de recevoir, pour cette fixation, une quelconque vis.

Plus particulièrement, encore, la présente invention concerne les vis, ou les vis chevilles, qui sont destinées à être implantées dans un matériau tendre, par exemple du plâtre, et dont la tête présente, en saillie, pour leur entraînement, au moins un ergot frangible.

Cette disposition a pour avantage de limiter à une valeur maximale donnée, correspondant à la rupture du ou des ergots frangibles ainsi mis en oeuvre, le couple de serrage susceptible d'être appliqué à une telle vis, et donc de ménager le matériau avec lequel est en prise son fût, notamment lorsque, comme en l'espèce, il s'agit d'un matériau tendre.

Mais elle peut se trouver en défaut si, préalablement à son engagement dans une pièce en un tel matériau tendre, formant pièce de support, la vis doit d'abord traverser, pour la fixer sur la précédente, une pièce en matériau plus dur ne présentant pas par avance de perçage propre à son passage, comme cela peut par exemple être le cas d'une quelconque pièce en matière synthétique, par exemple une goulotte, à fixer en un quelconque de ses points à une quelconque plaque en plâtre ou analogue, et, par exemple, à une plaque en plâtre du type de celle dont chacune des faces est cartonnée.

Dans un tel cas, le couple de visage appliqué à la vis pour que, par fluage de la matière synthétique concernée, elle se fraye un passage à travers la pièce à fixer peut être suffisant pour conduire à l'élimination prématurée de ses ergots frangibles.

Dans le brevet anglais GB-A-1 004 883, il est proposé de réduire le couple de vissage, en prévoyant, de place en place, en saillie, sur l'une et l'autre des faces principales du filet, à l'extrémité d'attaque du fût, des dents qui s'étendent globalement transversalement par rapport au filet.

Dans certaines, au moins, des réalisations proposées, ces dents ont un profil dissymétrique, avec un front raide qui est en arrière dans le sens du vissage, et, donc, avec un front plus fuyant en avant.

De fait, ces dents interviennent par matriçage ou fluage.

La présente invention a d'une manière générale pour objet une disposition prenant un parti inverse.

De manière plus précise, et suivant un premier aspect, elle a pour objet une vis du genre comportant une tête, un fût, et, en saillie en hélice sur ce fût, au moins un filet, avec, globalement transversalement, en saillie, sur l'une au moins des surfaces principales de ce filet, au moins une dent, cette vis étant d'une manière générale caractérisée en ce que, pour l'une au moins des surfaces principales du filet, le front raide de la dent est en avant dans le sens du vissage.

Ainsi, au lieu d'intervenir par matriçage ou fluage, cette dent intervient par usinage.

Il s'avère, en effet, à l'expérience, que, en usinant un copeau dans la pièce en matériau relativement dur à traverser, la dent ainsi mise en oeuvre permet d'abaisser de manière plus sensible le couple de vissage correspondant, l'effort pour un tel usinage étant moindre que celui nécessaire à un fluage.

Ainsi, dans le cas, particulier, où la tête de la vis présente, en saillie, pour son entraînement, au moins un ergot frangible en vue d'une mise en oeuvre dans un matériau tendre, un compromis particulièrement avantageux peut être trouvé dans les couples de vissage et de serrage à respecter, lorsque, lors de cette mise en oeuvre, la vis doit au préalable traverser un matériau plus dur.

Préférentiellement, mais non nécessairement obligatoirement, l'arête de la dent mise en oeuvre s'étend suivant une direction radiale par rapport au fût.

S'agissant d'une vis moulée, elle se marie ainsi avantageusement avec le plan de joint correspondant, ce qui en facilite la réalisation.

Lorsque, suivant une disposition particulière, et s'agissant d'une vis cheville, il est prévu, en saillie, sur la tranche d'extrémité du fût creux d'une telle vis cheville, pour la constitution d'une fraise, au moins une dent, cette dent est, suivant un autre aspect de l'invention, préférentiellement délimitée extérieurement par une surface conique dont le demi-angle au sommet est de l'ordre de 30°.

L'expérience montre en effet que l'effort d'enfoncement dans un matériau relativement dur est alors avantageusement réduit, et que, conjointement, le perçage obtenu est alors avantageusement net.

Les caractéristiques et avantages de l'invention ressortiront d'ailleurs de la description qui va suivre, à titre d'exemple, en référence aux dessins schématiques annexés sur lesquels :
la figure 1 est une vue en élévation de la face d'une vis suivant l'invention ;
la figure 2 en est une vue en coupe axiale suivant la ligne II-II de la figure 1 ;
la figure 3 en est une vue de dessous, suivant la flèche III de la figure 2 ;
la figure 4 en est une vue de dessus, suivant la flèche IV de la figure 2 ;
la figure 5 en est une vue partielle en élévation de côté, suivant la flèche V de la figure 1 ;
la figure 6 en est une vue en coupe transversale, suivant la ligne VI-VI de la figure 5 ;
la figure 7 reprend, à échelle supérieure, le détail de la figure 1 repéré par un encart VII sur cette figure 1 ;
les figures 8 et 9 sont chacune respectivement des vues analogues à celle de la figure 7 pour deux variantes de réalisation ;
la figure 10 est une vue analogue à celle de la figure 5, pour une autre variante de réalisation ;
la figure 11 est une vue analogue à celle de la figure 6, pour une autre variante de réalisation.

Ces figures illustrent à titre d'exemple l'application de l'invention à une vis cheville.

De manière connue en soi, cette vis cheville comporte, globalement, une tête 10, un fût 11, et, en saillie en hélice sur ce fût 11, au moins un filet 12.

Dans la forme de réalisation représentée, la tête 10 présente, radialement en saillie par rapport au fût 11, et, donc, transversalement par rapport à l'axe A de celui-ci, une collerette 13.

Pour son entraînement en vissage, la vis cheville suivant l'invention présente, en saillie sur la surface supérieure de sa collerette 13, parallèlement à l'axe A, au moins un ergot frangible 14.

Dans la forme de réalisation représentée, il est prévu en positions diamétralement opposées l'un par rapport à l'autre par rapport à l'axe A, deux ergots frangibles 14.

Dans cette forme de réalisation, la vis cheville suivant l'invention présente, en outre, en creux sur la surface supérieure de la collerette 13 de sa tête 10, et en croix par rapport aux ergots frangibles 14 précédents, pour un éventuel entraînement en dévissage, une saignée 15.

S'agissant d'une vis cheville, le fût 11 est creux.

Il présente donc, axialement, sur toute sa hauteur, un alésage 16.

Cet alésage 16 est cylindrique, et de section transversale circulaire, sur la quasi totalité de sa hauteur.

Dans les formes de réalisation représentées, il présente, cependant, à l'extrémité du fût 11 opposée à la tête 10, une légère dépouille D1, dont il résulte qu'il va en se rétrécissant de manière globalement tronconique en direction de son débouché correspondant.

Extérieurement, le fût 11 est également cylindrique, et de section transversale circulaire, sur la quasi totalité de sa hauteur.

Du côté de la tête 10, il présente, cependant, une légère dépouille D2, dont il résulte qu'il va en s'évasant en direction de cette tête 10.

Conjointement, à son extrémité opposée à la tête 10, le fût 11 présente une légère surépaisseur E1.

Dans la forme de réalisation représentée, sa tranche d'extrémité 18 opposée à la tête 10 présente, en saillie, parallèlement à l'axe A, au moins une dent 19.

Cette tranche d'extrémité 18 constitue de ce fait annulairement une fraise.

En pratique, elle comporte, régulièrement réparties circulairement autour de l'axe A, quatre dents 19, qui s'étendent chacune sur 90°.

Extérieurement, ces dents 19 sont toutes conjointement délimitées par une surface conique S de demi-angle au sommet B.

Suivant un aspect de l'invention, ce demi-angle au sommet B est de l'ordre de 30°.

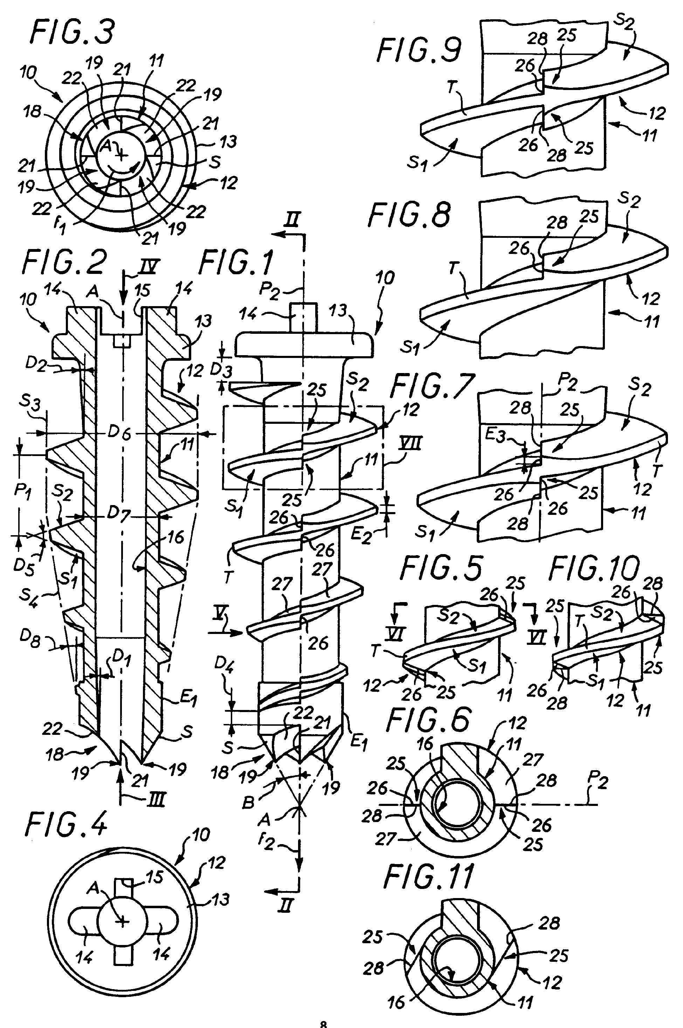

Individuellement, chacune des dents 19 présente, dans le sens du vissage, tel que repéré par la flèche F1 sur la figure 3, un front avant 21 droit, qui s'étend suivant un plan passant par l'axe A, et un front arrière 22, qui est incliné sur cet axe A.

Suivant un aspect de l'invention, ce front arrière 22 forme une facette inclinée à 45° sur l'axe A.

Dans la forme de réalisation représentée, le fût 11 ne porte en saillie qu'un seul filet 12.

Ce filet 12 s'étend en continu sur la quasi totalité de la hauteur du fût 11 et son pas P1 est régulier.

Dans la forme de réalisation représentée, cependant, il ne débute qu'à une distance déterminée, D3, de la surface inférieure de la collerette 13 de la tête 10, et, de même, il s'arrête à une distance déterminée, D4, de la racine des dents 19 que présente le fût 11 sur sa tranche d'extrémité 18.

L'une et l'autre de ces distances D3, D4 sont inférieures au pas P1.

Plus précisément, elles sont inférieures à la moitié de ce pas P1.

Par exemple, la distance D3 est de l'ordre du tiers du pas P1, et la distance D4 de l'ordre de son quart.

Globalement, le filet 12 est délimité par deux surfaces principales, l'une S1, qui est celle tournée du côté opposé à la tête 10, et qui forme sa face avant dans le sens d'enfoncement, tel que repéré par une flèche F2 sur la figure 1, l'autre S2, qui est celle tournée vers la tête 10, et qui forme sa face arrière dans le sens d'enfoncement, et, le long de son bord périphérique, par une tranche T.

Les surfaces principales S1, S2 forment globalement entre elles un dièdre d'angle D5 dont le plan bissecteur est sensiblement perpendiculaire à l'axe A.

Par exemple, l'angle D5 de ce dièdre est de l'ordre de 40°.

Sur une première portion de la hauteur du fût 11 à compter de la tête 10, sensiblement égale à la moitié de cette hauteur, la tranche T est définie par une surface cylindrique S3, de section transversale circulaire.

Le diamètre D6 de cette surface cylindrique S3 est sensiblement égal au double de celui, D7, de la surface cylindrique extérieure du fût 11.

Sur le reste de la hauteur du fût 11, la tranche T du filet 12 est définie par une surface tronconique S4 de demi-angle au sommet D8.

Ce demi-angle au sommet D8 est par exemple de l'ordre de 10°.

L'épaisseur E2 du filet 12 le long de son bord périphérique, c'est-à-dire la hauteur de sa tranche T, est sensiblement constante sur toute la longueur de celui-ci.

Sur l'une au moins de ses surfaces principales S1, S2, le filet 12 présente, en saillie, globalement transversalement par rapport à une telle surface principale S1, S2, au moins une dent 25.

En pratique, dans la forme de réalisation plus particulièrement représentée sur les figures 1 à 7, le filet 12 présente en saillie au moins une dent 25 par tour sur l'une et l'autre de ses surfaces principales S1, S2.

Plus précisément, dans cette forme de réalisation, il présente, en positions diamétralement opposées l'une par rapport à l'autre, deux dents 25 par tour sur chacune de ces surfaces principales S1, S2, et, de l'une à l'autre de celles-ci, ces dents 25 sont en correspondance l'une avec l'autre.

Chacune des dents 25 a un profil dissymétrique, avec un front raide 26 et un front en pente douce 27.

Suivant l'invention, pour l'une au moins des surfaces principales S1, S2, le front raide 26 est en avant dans le sens du vissage.

Dans la forme de réalisation représentée, le front raide 26 est en avant dans le sens du vissage pour la surface principale S2, et il est en arrière pour la surface principale S1.

Dans l'un et l'autre cas, ce front raide 26 est droit.

Dans les formes de réalisation plus particulièrement représentées sur les figures 1 à 10, l'arête 28 des dents 25 s'étend suivant une direction radiale par rapport au fût 11.

Leur front raide 26 s'étend donc dans un plan P2, qui, passant par l'axe A, est un plan diamétral pour l'ensemble.

Ce plan diamètral P2 est le même pour les dents 25 de l'une et l'autre des surfaces principales S1, S2.

Préférentiellement, lorsque, comme en l'espèce, la vis cheville concernée est en matière moulée, il s'agit du plan de joint correspondant.

En pratique, pour l'une et l'autre des surfaces principales S1, S2, l'arête des dents 25 s'étend en continu du fût 11 au bord périphérique du filet 12.

Dans les formes de réalisation plus particulièrement représentées sur les figures 1 à 9, la hauteur E3 d'une dent 25 est constante tout au long de son arête 28.

En pratique, cette hauteur E3 est au moins égale à la moitié de l'épaisseur E2 du filet 12 le long de son bord périphérique.

Dans la variante de réalisation représentée à la figure 8, seule la surface principale S2 du filet 12, c'est-à-dire sa surface tournée vers la tête 10, comporte des dents 25, avec un front raide 26 en avant dans le sens du vissage.

Dans la variante de réalisation représentée sur la figure 9, l'une et l'autre des surfaces principales S1, S2 du filet 12 comportent des dents 25, et le front raide 26 de celles-ci est en avant dans le sens du vissage pour l'une et l'autre de ces surfaces principales S1, S2.

Dans la variante de réalisation représentée sur la figure 10, la hauteur E3 des dents 25 varie le long de leur arête 28.

Elle est faible, voire nulle, à la racine du filet 12, c'est-à-dire le long du fût 11, pour augmenter progressivement et être maximale le long du bord périphérique du filet 12.

Dans la variante de réalisation représentée sur la figure 11, au lieu de s'étendre suivant une direction radiale par rapport au fût 11, l'arête 28 des dents 25 s'étend suivant une direction tangentielle par rapport à celui-ci.

Ainsi qu'on le notera, les dents 25 s'arrêtent dans tous les cas à la tranche T du filet 12, sans déborder sur cette tranche T.

Autrement dit, ces dents 25 s'étendent tout entières à l'intérieur de la surface S3 ou S4 qui, définissant la tranche T du filet 12, en est l'enveloppe.

La fabrication s'en trouve avantageusement simplifiée.

Bien entendu, la présente invention ne se limite pas aux formes de réalisation décrites et représentées, mais englobe toute variante d'exécution et/ou de combinaison de leurs divers éléments.

En particulier, les diverses valeurs numériques qui ont été indiquées ne doivent en rien être considérées comme limitatives de l'invention.

Le domaine d'application de l'invention n'est pas non plus limité à celui des seules vis chevilles pour matériau tendre, mais s'étend d'une manière plus générale à n'importe quelle vis.

## Revendications

1. Vis du genre comportant une tête (10), un fût (11), et, en saillie en hélice sur ce fût (11), au moins un filet (12), avec, globalement transversalement, en saillie, sur l'une au moins des surfaces principales (S1, S2) de ce filet (12), au moins une dent (25), caractérisée en ce que, pour l'une au moins des surfaces principales (S1, S2) du filet (12), le front raide (26) de la dent (25) est en avant dans le sens du vissage.

2. Vis suivant la revendication 1, caractérisée en ce que la dent (25) a un profil dissymétrique.

3. Vis suivant la revendication 2, caractérisée en ce que le front raide (26) de la dent (25) est droit.

4. Vis suivant l'une quelconque des revendications 1 à 3, caractérisée en ce que l'arête (28) de la dent (25) s'étend suivant une direction radiale par rapport au fût (11).

5. Vis suivant l'une quelconque des revendications 1 à 4, caractérisée en ce que l'arête (28) de la dent (25) s'étend du fût (11) au bord périphérique du filet (12).

6. Vis suivant l'une quelconque des revendications 1 à 5, caractérisée en ce que la hauteur (E3) de la dent (25) est constante tout au long de son arête (28).

7. Vis suivant l'une quelconque des revendications 1 à 6, caractérisée en ce que la dent (25) s'étend tout entière à l'intérieur de la surface (S3, S4) qui définit la tranche (T) du filet (12).

8. Vis suivant la revendication 7, caractérisée en ce que la hauteur (E3) de la dent (25) est au moins égale à la moitié de l'épaisseur (E2) du filet (12) le long de son bord périphérique.

9. Vis suivant l'une quelconque des revendications 1 à 8, caractérisée en ce que, sur sa surface principale (S1, S2) concernée, le filet (12) présente en saillie au moins une dent (25) par tour.

10. Vis suivant l'une quelconque des revendications 1 à 9, caractérisée en ce que la surface principale (S2) du filet (12) qui comporte la dent (25) est celle tournée vers la tête (10).

11. Vis suivant l'une quelconque des revendications 1 à 10, caractérisée en ce que le filet (12) présente aussi au moins une dent (25) en saillie sur l'autre de ses surfaces principales (S1, S2).

12. Vis suivant les revendications 10 et 11, prises conjointement, caractérisée en ce que, d'une des surfaces principales (S1, S2) du filet (12) à l'autre, les dents (25) sont en correspondance l'une avec l'autre.

13. Vis suivant la revendication 12, caractérisé en ce que, sur l'une des surfaces principales (S1, S2) du filet (12), le front raide (26) d'une dent (25) est en avant dans le sens du vissage, et il est en arrière sur l'autre.

14. Vis suivant l'une quelconque des revendications 1 à 13, caractérisée en ce que, pour son entraînement en vissage, sa tête (10) présente en saillie au moins un ergot frangible (14).

15. Vis suivant l'une quelconque des revendications 1 à 14, caractérisée en ce que son fût (11) est creux, et, présentant en saillie au moins une dent (19), sa tranche d'extrémité (18) constitue annulairement une fraise.

16. Vis suivant la revendication 15, caractérisée en ce que la dent (19) que son fût (11) comporte en saillie sur sa tranche d'extrémité (18) est délimitée extérieurement par une surface conique (S) dont le demi-angle au sommet (B) est de l'ordre de 30°.

17. Vis suivant l'une quelconque des revendications 15, 16, caractérisée en ce que, dans le sens du vissage, la dent (19) que son fût (11) comporte en saillie sur sa tranche d'extrémité (18) présente un front avant (21) droit, suivant un plan passant par l'axe (A) de ce fût (11), et un front arrière (22) incliné à 45° sur cet axe (A).

## Patentansprüche

1. Schraube der Art mit einem Kopf (10), einem Schaft (11) und spiralförmig von dem Schaft (11) vorspringend zumindest einem Gewinde (12) mit mindestens einem Zahn (25), der zumindest von einer der Hauptflächen (S1, S2) dieses Gewindes (12) allgemein quer vorsteht,
dadurch **gekennzeichnet**,
daß zumindest für eine der Hauptflächen (S1, S2) des Gewindes (12) die steile Stirnseite (26) des Zahns (15) im Schraubsinn vorne liegt.

2. Schraube nach Anspruch 1,
dadurch **gekennzeichnet**, daß der Zahn (25) ein asymmetrisches Profil hat.

3. Schraube nach Anspruch 2,
dadurch **gekennzeichnet**, daß die steile Vorderseite (26) des Zahns (25) vertikal verläuft.

4. Schraube nach irgendeinem der Ansprüche 1 bis 3,
dadurch **gekennzeichnet**, daß der Anschlag (28) des Zahns (25) sich entlang einer radialen Richtung bezüglich des Schaftes (11) erstreckt.

5. Schraube nach irgendeinem der Ansprüche 1 bis 4,
dadurch **gekennzeichnet**, daß der Anschlag (28) des Zahnes (25) sich von dem Schaft (11) an der Umfangskante des Gewindes (12) erstreckt.

6. Schraube nach irgendeinem der Ansprüche 1 bis 5,
dadurch **gekennzeichnet**, daß die Höhe (E3) des Zahns (25) entlang seines Anschlags (28) konstant ist.

7. Schraube nach irgendeinem der Ansprüche 1 bis 6,
dadurch **gekennzeichnet**, daß sich der Zahn (25) vollständig an der Innenseite der Fläche (S3, S4), die die Schneidfläche (T) des Gewindes (12) definiert, erstreckt.

8. Schraube nach Anspruch 7,
dadurch **gekennzeichnet**, daß die Höhe (E3) des Zahns (25) zumindest gleich der Hälfte der Dicke (E2) des Gewindes (12) entlang dessen Umfangskante ist.

9. Schraube nach irgendeinem der Ansprüche 1 bis 8,
dadurch **gekennzeichnet**, daß das Gewinde (12) an seiner betroffenen Hauptfläche (S1, S2) zumindest einen vorstehenden Zahn (25) pro Umdrehung aufweist.

10. Schraube nach irgendeinem der Ansprüche 1 bis 9,
dadurch **gekennzeichnet**, daß die Hauptfläche (S2) des Gewindes (12), die den Zahn (21) aufweist, die dem Kopf (10) zugewandte ist.

11. Schraube nach irgendeinem der Ansprüche 1 bis 10,
dadurch **gekennzeichnet**, daß das Gewinde (12) auch zumindest einen Zahn (25) aufweist, der von der anderen der Hauptflächen (S1, S2) vorsteht.

12. Schraube nach den Ansprüchen 10 und 11,
zusammengenommen,
dadurch **gekennzeichnet**, daß von einer der Hauptflächen (S1, S2) des Gewindes (12) zur anderen die Zähne (25) einander entsprechen.

13. Schraube nach Anspruch 12,
dadurch **gekennzeichnet**, daß die steile Stirnseite (26) eines Zahns (25) an einer der Hauptflächen (S1, S2) des Gewindes (12) im Schraubsinn gesehen vorne liegt und sie hinter der anderen liegt.

14. Schraube nach irgendeinem der Ansprüche 1 bis 13,
dadurch **gekennzeichnet**, daß ihr Kopf (10) zum Verschrauben zumindest eine vorspringende zerbrechbare Nase (14) aufweist.

15. Schraube nach irgendeinem der Ansprüche 1 bis 14,
dadurch **gekennzeichnet**, daß ihr Schaft (11) hohl ist und ihre Endschneidfläche (18), die zumindest einen vorstehenden Zahn (19) aufweist, ringförmig einen Fräser bildet.

16. Schraube nach Anspruch 15,
dadurch **gekennzeichnet**, daß der Zahn (19), den ihr Schaft (11) von der Endschneidfläche (18) vorstehend aufweist, nach außen durch eine konische Fläche (S) begrenzt ist, deren Halbwinkel an der Spitze (B) in der Größenordnung von 30° liegt.

17. Schraube nach irgendeinem der Ansprüche 15, 16,
dadurch **gekennzeichnet**, daß der Zahn (19), den ihr Schaft (11) an der Endschneidfläche (18) vorstehend aufweist, im Schraubsinn eine vertikale vordere Stirnseite in einer durch die Achse (A) des Schaftes (11) laufenden Ebene und eine hintere Stirnseite (22), die gegenüber der Achse (A) um 25° geneigt ist, aufweist.

## Claims

1. A screw of the kind comprising a head (10), a shank (11) and, in projecting relationship in a helical configuration on said shank (11), at least one thread (12) with at least one tooth (25) disposed generally transversely in projecting relationship on one at least of the main surfaces (S1, S2) of said thread (12), characterised in that, for one at least of the main surfaces (S1, S2) of the thread (12), the steep face (26) of the tooth (25) is at the front in the direction of screwing.

2. A screw according to claim 1 characterised in that the tooth (25) is of an asymmetrical profile.

3. A screw according to claim 2 characterised in that the steep face (26) of the tooth (25) is straight.

4. A screw according to any one of claims 1 to 3 characterised in that the edge (28) of the tooth (25) extends in a radial direction with respect to the shank (11).

5. A screw according to any one of claims 1 to 4 characterised in that the edge (28) of the screw (25) extends from the shank (11) to the peripheral edge of the thread (12).

6. A screw according to any one of claims 1 to 5 characterised in that the height (E3) of the tooth (25) is constant all along its edge (28).

7. A screw according to any one of claims 1 to 6 characterised in that the tooth (25) extends entirely within the surface (S3, S4) which defines the edge face (T) of the thread (12).

8. A screw according to claim 7 characterised in that the height (E3) of the tooth (25) is at least equal to half the thickness (E2) of the thread (12) along its peripheral edge.

9. A screw according to any one of claims 1 to 8 characterised in that, on its main surface (S1, S2) in question, the thread (12) has in projecting relationship at least one tooth (25) per turn.

10. A screw according to any one of claims 1 to 9 characterised in that the main surface (S2) of the thread (12) which comprises the tooth (25) is that which faces towards the head (10).

11. A screw according to any one of claims 1 to 10 characterised in that the thread (12) also has at least one tooth (25) in projecting relationship on the other of its main surfaces (S1, S2).

12. A screw according to claims 10 and 11 in combination characterised in that the teeth (25) are in mutually corresponding positions, from one of the main surfaces (S1, S2) of the thread (12) to the other.

13. A screw according to claim 12 characterised in that, on one of the main surfaces (S1, S2) of the thread (12), the steep face (26) of a tooth (25) is at the front in the direction of screwing and it is at the rear on the other.

14. A screw according to any one of claims 1 to 13 characterised in that the head (10) of the screw has at least one frangible lug (14) in projecting relationship for screwingly driving the screw.

15. A screw according to any one of claims 1 to 14 characterised in that its shank (11) is hollow and, having at least one tooth (19) in projecting relationship, its end face (18) constitutes a cutter of an annular configuration.

16. A screw according to claim 15 characterised in that the tooth (19) that its shank (11) has in projecting relationship on its end face (18) is externally delimited by a conical surface (S) whose half-angle (B) at the apex is of the order of 30°.

17. A screw according to either one of claims 15 and 16 characterised in that, in the direction of screwing, the tooth (19) that its shank (11) has in projecting relationship on its end face (18) has a straight front face (21) along a plane passing through the axis (A) of said shank (11), and a rear face (22) which is inclined at 45° to said axis (A).
